# EUROPEAN PATENT APPLICATION

(11) **EP 3 778 072 A1**
(43) Date of publication of application: **17.02.2021**
(21) Application number: 19774499.8
(22) Date of filing: 25.03.2019
(51) Int. Cl.: B22F 3/105, B22F 3/16, B33Y 30/00, B33Y 50/02

(54) **IRRADIATION DEVICE, METAL MOLDING DEVICE, METAL MOLDING SYSTEM, IRRADIATION METHOD, AND METHOD FOR MANUFACTURING METAL MOLDED OBJECT**

(30) Priority: 30.03.2018 JP 2018069699
(71) Applicant: Fujikura, Ltd., Tokyo 135-8512 (JP)
(72) Inventor: KUSAKA, Hiroyuki, Sakura-shi, Chiba 285-8550 (JP); KASHIWAGI, Masahiro, Sakura-shi, Chiba 285-8550 (JP)
(74) Representative: Plasseraud IP
(86) International application number: PCT/JP2019/012381
(87) International publication number: WO 2019/188914

(57) **Abstract**

The present invention causes residual stress, which may be generated in a metal shaped object (MO), to be small. An irradiation device (13) includes: a first irradiating section (13A) configured to irradiate, with first laser light (LA), a first region (DA) of a powder bed (PB); and second irradiating section (13B) configured to irradiate, with second laser light (LB), a second region (DB) of the powder bed (PB). The second irradiating section (13B) irradiates the second region (DB) with the second laser light (LB) so that an energy density of the second laser light (LB), with which the second region (DB) is irradiated, is lower than an energy density of the first laser light (LA), with which the first region (DA) is irradiated.

## Description

### Technical Field

The present invention relates to an irradiation device and an irradiation method for use in metal shaping. The present invention also relates to a metal shaping device including such an irradiation device and to a metal shaping system including such a metal shaping device. The present invention also relates to a metal shaped object production method including such an irradiation method.

### Background Art

As a method of producing a three-dimensional metal shaped object, an additive manufacturing method using a powder bed as a preform is known. Such additive manufacturing methods include (1) an electron beam mode in which, with use of an electron beam, a powder bed is (a) melted and solidified or (b) sintered and (2) a laser beam mode in which, with use of a laser beam, a powder bed is (a) melted and solidified or (b) sintered (see Non-Patent Literature 1).

According to an additive manufacturing method of the electron beam mode, auxiliary heating (also called "preheating") for preliminary sintering of a powder bed is necessary before main heating which is performed by irradiation with an electron beam. This is because if a powder bed, which has not been subjected to preliminary sintering, is irradiated with an electron beam, then a smoking phenomenon can easily occur in which a metal powder constituting the powder bed whirls up in the form of smoke, so that it is difficult to form a normal molten pool. Note that it is known that, in auxiliary heating, a temperature of a powder bed need only be set to 0.5 times to 0.8 times (any numerical range "A to B" herein means "not less than A and not more than B") as high as a melting point of a metal powder.

### Citation List

### [Non-patent Literature]

### [Non-Patent Literature 1]

Chiba A., "Characteristics of Metal Structure Based on Additive Manufacturing Technique Using Electron Beam", Measurement and Control, Vol. 54, No. 6, June 2015, p. 399-400

### Summary of Invention

### Technical Problem

As described above, according to an additive manufacturing method of an electron beam mode, auxiliary heating, in which a powder bed is subjected to preliminary sintering, is ordinarily performed before main heating which is performed by irradiation with an electron beam. This brings about the following disadvantage and advantage to the additive manufacturing method of the electron beam mode. The disadvantage is that it takes a long period of time for additive manufacturing of a metal shaped object, due to auxiliary heating performed before main heating. On the other hand, the advantage is that residual stress which may be generated in a completed metal shaped object is small. This is considered as a secondary effect of auxiliary heating of a powder bed.

According to an additive manufacturing method of a laser beam mode, unlike the additive manufacturing method of the electron beam mode, a charge-up of a metal powder never occurs. The smoking phenomenon described above therefore never occurs. Therefore, according to the additive manufacturing method of the laser beam mode, auxiliary heating for preliminary sintering of a powder bed is ordinarily not performed before main heating which is performed by irradiation with a laser beam. This brings about the following advantage and disadvantage to the additive manufacturing method of the laser beam mode. The advantage is that because the auxiliary heating is not performed before main heating, a period of time for additive manufacturing of a metal shaped object is short. The disadvantage, in contrast, is that a residual stress which may be generated in a completed metal shaped object is large.

Therefore, it is demanded that the disadvantage of an additive manufacturing method of a laser beam mode is reduced while the advantage thereof is maintained. Specifically, it is demanded that while a period of time for additive manufacturing of a metal shaped object is made short, residual stress, which may be generated in a completed metal shaped object, is made small.

The present invention has been made in view of the above problem, and it is an object of the present invention to provide an irradiation device, a metal shaping device, a metal shaping system, an irradiation method, or a metal shaped object production method, any of which (i) employs an additive manufacturing method of a laser beam mode and (ii) can cause residual stress, which may be generated in a completed metal shaped object, to be small while causing a period of time for additive manufacturing of the metal shaped object to be short.

### Solution to Problem

In order to attain the object, an irradiation device in accordance with an aspect of the present invention is an irradiation device for use in metal shaping, including: a first irradiating section configured to irradiate, with first laser light, a first region of a powder bed containing a metal powder; and a second irradiating section configured to irradiate, with second laser light, a second region of the powder bed, the irradiation device being configured so that at least part of a track of the second region overlaps at least part of a track of the first region, and the second irradiating section irradiates the second region with the second laser light so that (1) an energy density of the second laser light, with which the second region is irradiated, is lower than an energy density of the first laser light, with which the first region is irradiated or (2) a temperature of the second region of the powder bed is lower than a temperature of the first region of the powder bed.

In order to attain the object, an irradiation method in accordance with an aspect of the present invention is an irradiation method including the steps of: (i) irradiating, with first laser light, a first region of a powder bed containing a metal powder; and (ii) irradiating, with second laser light, a second region of the powder bed, at least part of a track of the second region overlapping at least part of a track of the first region, and in the step (ii), the second region being irradiated with the second laser light so that (1) an energy density of the second laser light, with which the second region is irradiated, is lower than an energy density of the first laser light, with which the first region is irradiated or (2) a temperature of the second region of the powder bed is lower than a temperature of the first region of the powder bed.

In order to attain the object, a metal shaped object production method in accordance with an aspect of the present invention is a method of producing a metal shaped object, including the steps of: (i) irradiating, with first laser light, a first region of a powder bed containing a metal powder; and (ii) irradiating, with second laser light, a second region of the powder bed, at least part of a track of the second region overlapping at least part of a track of the first region, and in the step (ii), the second region being irradiated with the second laser light so that (1) an energy density of the second laser light, with which the second region is irradiated, is lower than an energy density of the first laser light, with which the first region is irradiated or (2) a temperature of the second region of the powder bed is lower than a temperature of the first region of the powder bed.

### Advantageous Effects of Invention

With an aspect of the present invention, it is possible to achieve an irradiation device, a metal shaping device, a metal shaping system, an irradiation method, or a metal shaped object production method, any of which can cause residual stress, which may be generated in a metal shaped object, to be small while employing an additive manufacturing method of a laser beam mode.

### Brief Description of Drawings

Fig. 1 is a view illustrating a configuration of a metal shaping system in accordance with an embodiment of the present invention.
Fig. 2 is a view illustrating a configuration of an irradiating section included in the metal shaping system illustrated in Fig. 1.
Fig. 3 is a set of plan views (a) and (b) illustrating a powder bed used in the metal shaping system illustrated in Fig. 1.
Fig. 4 is a flowchart illustrating a flow of a metal shaped object production method in accordance with an embodiment of the present invention.

### Description of Embodiments

### (Configuration of metal shaping system)

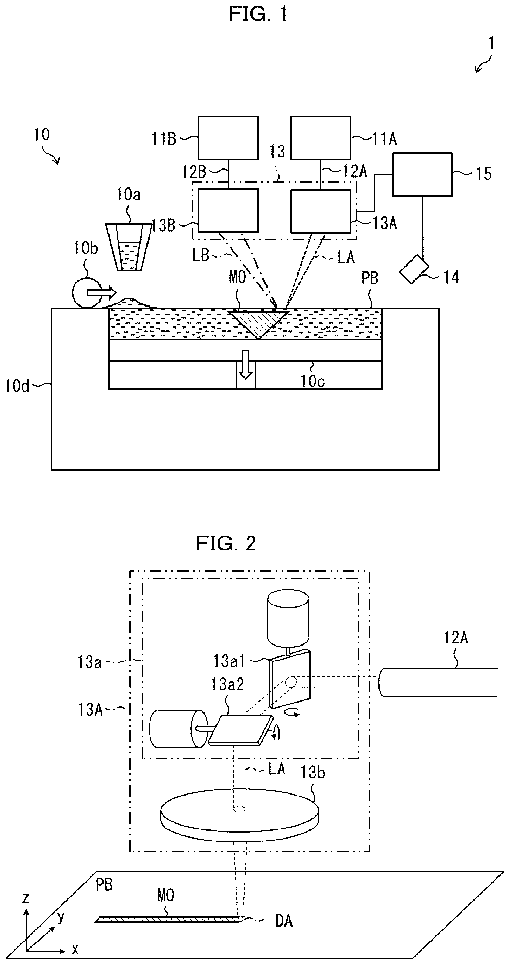

The following description will discuss, with reference to Figs. 1 and 2, a metal shaping system 1 in accordance with an embodiment of the present invention. Fig. 1 is a view illustrating a configuration of the metal shaping system 1. Fig. 2 is a view showing an example of a configuration of a first irradiating section 13A described later.

The metal shaping system 1 is a system for additive manufacturing of a three-dimensional metal shaped object MO. As illustrated in Fig. 1, the metal shaping system 1 includes (i) a shaping table 10, (ii) two laser devices (first laser device 11A, second laser device 11B), (iii) two optical fibers (first optical fiber 12A, second optical fiber 12B), (iv) an irradiation device 13 including two irradiating sections (first irradiating section 13A, second irradiating section 13B), (v) a measuring section 14, and (vi) a control section 15. The first irradiating section 13A and the second irradiating section 13B can be contained in respective housings, or can be contained in a single housing (not illustrated). The main parts of the metal shaping system 1 are herein called "metal shaping device". The metal shaping device can include at least two optical fibers 12A and 12B and the irradiation device 13. The metal shaping device can further include the measuring section 14 and the control section 15.

In the present section, the shaping table 10, the laser devices 11A and 11B, the optical fibers 12A and 12B, and the irradiating sections 13A and 13B will be described, and then effect to be brought about by this configuration will be described. The measuring section 14 and the control section 15 will be described in the next section.

The shaping table 10 is a configuration for holding a powder bed PB. As illustrated in Fig. 1, for example, the shaping table 10 can include a recoater 10a, a roller 10b, a stage 10c, and a table main body 10d on which the recoater 10a, the roller 10b, and the stage 10c are provided. The recoater 10a is a section for supplying a metal powder. The roller 10b is a section for uniformly distributing, on the stage 10c, the metal powder supplied by the recoater 10a. The stage 10c is a section on which the metal powder uniformly distributed by the roller 10b is to be placed, and is configured to be raisable and lowerable. The powder bed PB is configured to contain a metal powder which is uniformly distributed on the stage 10c. The metal shaped object MO including layers each having a certain thickness is shaped, layer by layer, by repeating the following steps (1) through (3): (1) forming a powder bed PB on the stage 10c as described earlier; (2) shaping one layer of the metal shaped object MO, as described later, by irradiating the powder bed PB with first laser light LA and second laser light LB; and (3) lowering the stage 10c by an amount corresponding to one layer.

Note that the configuration of the shaping table 10 is not limited to that described earlier, provided that the shaping table 10 has a function of holding the powder bed PB. For example, it is possible that (i) the shaping table 10 includes, instead of the recoater 10a, a powder tank for containing a metal powder and (ii) the metal powder is supplied by raising a bottom plate of the powder tank.

The first laser device 11A is configured to output first laser light LA. The second laser device 11B is configured to output second laser light LB. According to the present embodiment, the laser devices 11A and 11B are each a fiber laser. Note, however, that the laser devices 11A and 11B are not limited to fiber lasers. The laser devices 11A and 11B can be any laser devices such as a solid laser, a liquid laser, or gas laser. Examples of fiber lasers to be used as the laser devices 11A and 11B encompass MOPA fiber lasers and CW fiber lasers.

The first optical fiber 12A is configured to guide first laser light LA outputted from the first laser device 11A. The second optical fiber 12B is configured to guide second laser light LB outputted from the second laser device 11B. According to the present embodiment, the optical fibers 12A and 12B are each a double cladding fiber. Note, however, that the optical fibers 12A and 12B are not limited to double cladding fibers. The optical fibers 12A and 12B can be any optical fibers such as single cladding fibers or triple cladding fibers.

The first irradiating section 13A is configured to irradiate the powder bed PB with the first laser light LA which is guided by the first optical fiber 12A. The second irradiating section 13B is configured to irradiate the powder bed PB with the second laser light LB which is guided by the second optical fiber 12B. According to the present embodiment, the irradiating sections 13A and 13B are each a galvano-type irradiation device. According to the present embodiment, the first irradiating section 13A and the second irradiating section 13B share a common configuration. Therefore, the configuration of the first irradiating section 13A will be described with reference to Fig. 2. According to an aspect of the present invention, however, the first irradiating section 13A and the second irradiating section 13B can be configured differently.

As illustrated in Fig. 2, the first irradiating section 13A includes: a galvano scanner 13a including (i) a first galvano mirror 13a1 and (ii) a second galvano mirror 13a2; and a condensing lens 13b. First laser light LA outputted from the first optical fiber 12A is (1) reflected by the first galvano mirror 13a1, (2) reflected by the second galvano mirror 13a2, and then (3) converged by the condensing lens 13b so as to then irradiate the powder bed PB.

Note that the first galvano mirror 13a1 is configured to move, in a first direction (for example, in an x-axis direction illustrated in Fig. 2), a beam spot of the first laser light LA which is formed on a surface of the powder bed PB. The second galvano mirror 13a2 is configured to move, in a second direction (for example, in a y-axis direction illustrated in Fig. 2) intersecting with (e.g. perpendicular to) the first direction, the beam spot of the first laser light LA which is formed on the surface of the powder bed PB. The condensing lens 13b is configured to reduce a beam spot diameter of the first laser light LA on the surface of the powder bed PB.

Note that the beam spot diameter of the laser light LA on the surface of the powder bed PB may or may not match a beam waist diameter of the laser light LA converged by the condensing lens 13b. Alternatively, the beam spot diameter of the laser light LA on the surface of the powder bed PB can be adjusted so that an energy density of the laser light LA irradiating the powder bed PB has a desired value. In such a case, the beam spot diameter of the laser light LA on the surface of the powder bed PB is larger than the beam waist diameter of the laser light LA converged by the condensing lens 13b.

The first laser light LA emitted from the first irradiating section 13A is laser light for heating the powder bed PB so that a temperature T of the powder bed PB is higher than 0.8 times as high as a melting point Tm of the metal powder (hereinafter, such heating will be referred to as "main heating"). Meanwhile, the second laser light LB emitted from the second irradiating section 13B is laser light for heating the powder bed PB so that the temperature T of the powder bed PB is 0.5 times to 0.8 times as high as the melting point Tm of the metal powder (hereinafter, such heating will be referred to as "auxiliary heating"). Therefore, the first irradiating section 13A irradiates the powder bed PB with the first laser light LA so that a temperature TA of a first region DA of the powder bed PB, which first region DA is irradiated with the first laser light LA, is higher than a temperature TB of a second region DB of the powder bed PB, which second region DB is irradiated with the second laser light LB. Meanwhile, the second irradiating section 13B irradiates the powder bed PB with the second laser light LB so that the temperature TB of the second region DB, which is irradiated with the second laser light LB, is lower than the temperature TA of the first region DA which is irradiated with the first laser light LA. In addition, the first irradiating section 13A scans the powder bed PB with the first laser light LA so that at least part of a track of the first region DA, which is irradiated with the first laser light LA, overlaps at least part of a track of the second region DB which is irradiated with the second laser light LB. Meanwhile, the second irradiating section 13B scans the powder bed PB with the second laser light LB so that at least part of the track of the second region DB, which is irradiated with the second laser light LB, overlaps at least part of the first region DA which is irradiated with the first laser light LA.

As has been described, the irradiation device 13 makes it possible to perform auxiliary heating of the powder bed PB so that the auxiliary heating is performed (I) in at least part of the track of the first region DA which is irradiated with the first laser light LA and (II) at least one of the following times: (i) before the main heating of the powder bed PB, (ii) after the main heating, and (iii) during the main heating. This advantageously allows residual stress, which may be generated in the metal shaped object MO, to be small. In addition, the second irradiating section 13B, which emits the second laser light LB, is independent of the first irradiating section 13A which emits the first laser light. This advantageously makes it possible to perform, to a higher degree of freedom, irradiation with laser light LB for the auxiliary heating. Similar advantageous effects can be obtained also by (i) a metal shaping device including the irradiation device 13 and (ii) a metal shaping system 1 including the metal shaping device.

Provided that the irradiation device 13 can satisfy the condition that the temperature TB of the second region DB of the powder bed PB is lower than the temperature TA of the first region DA of the powder bed PB, there are no limitations on which of the following energy densities is greater than the other: (i) the energy density of the first laser light LA irradiating the first region DA and (ii) the energy density of the second laser light LB irradiating the second region DB. The temperature TA and the temperature TB are determined according to not only the energy density of the first laser light LA irradiating the first region DA and the energy density of the second laser light LB irradiating the second region DB, respectively, but also a plurality of factors such as (a) wavelengths of the first laser light LA and the second laser light LB, respectively and (b) the wavelength dependency of the absorbance of the metal powder. The irradiation device 13, in view of these factors, need only be configured as appropriate so as to satisfy the condition that the temperature TB of the second region DB of the powder bed PB is lower than the temperature TA of the first region DA of the powder bed PB.

Note that the first irradiating section 13A preferably emits the first laser light LA so that, in the first region DA irradiated with the first laser light LA, the temperature TA of the powder bed PB is higher than 0.8 times as high as the melting point Tm of the metal powder.

In particular, in a case where each layer of the metal shaped object MO is to be shaped by melting and solidifying the metal powder, the first irradiating section 13A preferably emits the first laser light LA so that, in the first region DA irradiated with the first laser light LA, the temperature TA of the powder bed PB is higher than the melting point Tm of the metal powder. In such a case, scanning the powder bed PB with the first laser light LA causes the powder bed PB to be melted and solidified in the track of the first region DA. This shapes each layer of the metal shaped object MO.

Meanwhile, in a case where each layer of the metal shaped object MO is to be shaped by sintering the metal powder, the first irradiating section 13A preferably emits the first laser light LA so that, in the first region DA irradiated with the first laser light LA, the temperature TA of the powder bed PB is (i) higher than 0.8 times as high as the melting point Tm of the metal powder and (ii) lower than the melting point Tm of the metal powder. In such a case, scanning the powder bed PB with the first laser light LA causes the powder bed PB to be sintered in the track of the first region DA. This shapes each layer of the metal shaped object MO.

In addition, the second irradiating section 13B preferably emits the second laser light so that, in the second region DB irradiated with the second laser light LB, the temperature TB of the powder bed PB is 0.5 times to 0.8 times as high as the melting point Tm of the metal powder. In a case where (i) this condition is satisfied and (ii) the second region DB is irradiated with the second laser light LB before the first region DA is irradiated with the first laser light LA, scanning the powder bed PB with the second laser light LB allows the powder bed PB to be heated in the track of the second region DB. Meanwhile, in a case where (i) the above condition is satisfied and (ii) the second region DB is irradiated with the second laser light LB after the first region DA is irradiated with the first laser light LA, it is possible to decrease a temperature difference after the irradiation with the first laser light LA between the first region DA and a region around the first region DA.

Examples of a method by which the temperature TB of the second region DB of the powder bed PB is caused to be lower than the temperature TA of the first region DA of the powder bed PB encompass a method in which the energy density of the second laser light LB irradiating the second region DB is caused to be lower than the energy density of the first laser light LA irradiating the first region DA. By setting the respective wavelengths of the first laser light LA and the second laser light LB so that the energy density of the second laser light LB irradiating the second region DB is lower than the energy density of the first laser light LA irradiating the first region DA, it is possible to cause the temperature TB of the second region DB of the powder bed PB to be lower than the temperature TA of the first region DA of the powder bed PB. The use of such an irradiation device 13 advantageously allows residual stress, which may be generated in the metal shaped object MO, to be small. Similar advantageous effects can be obtained also by (i) a metal shaping device including such an irradiation device 13 and (ii) a metal shaping system 1 including the metal shaping device.

Note that in a case where the energy density of the second laser light LB irradiating the second region DB is caused to be lower than the energy density of the first laser light LA irradiating the first region DA, causing the wavelength of the second laser light LB to be longer than the wavelength of the first laser light LA makes it easier to obtain the above-described effect in comparison with a case where the wavelength of the second laser light LB is shorter than the wavelength of the first laser light LA. Therefore, in a case where the energy density of the second laser light LB irradiating the second region DB is caused to be lower than the energy density of the first laser light LA irradiating the first region DA, it is preferable to also cause the wavelength of the second laser light LB to be longer than the wavelength of the first laser light LA. Note, however, that even in a case where the wavelength of the second laser light LB is shorter than the wavelength of the first laser light LA, the state, in which the temperature TB of the second region DB of the powder bed PB is lower than the temperature TA of the first region DA of the powder bed PB, can still be achieved by changing other conditions such as the type of the metal powder (i.e. the absorbance of the metal powder).

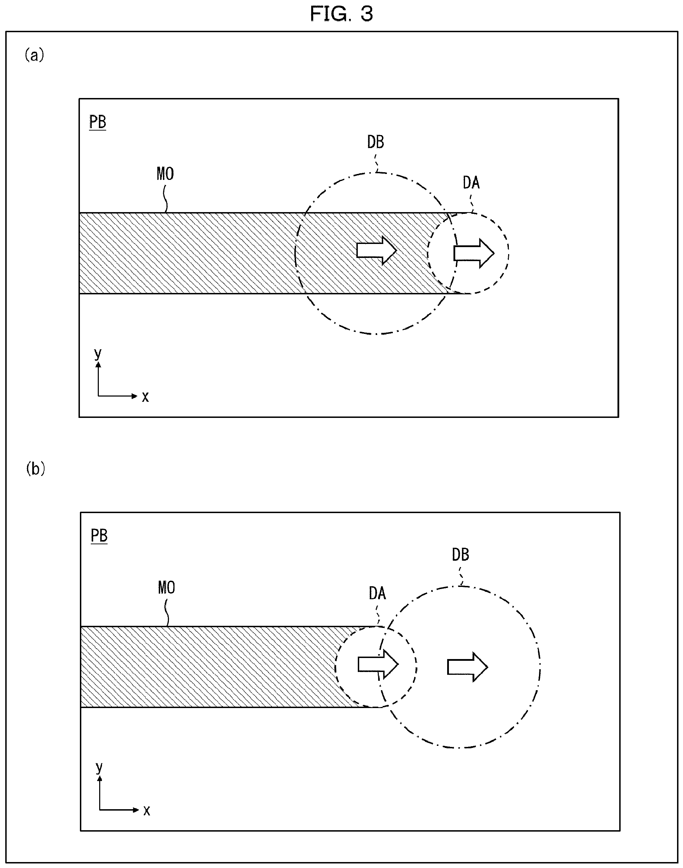

Note that there are at least two possible methods as methods of scanning the powder bed with the first laser light LA and the second laser light LB. A first method is, as illustrated in (a) of Fig. 3, a method in which at least part of the first region DA is irradiated with the second laser light LB before irradiation with the first laser light LA. A second method is, as illustrated in (b) of Fig. 3, a method in which at least part of the first region DA is irradiated with the second laser light LB after irradiation with the first laser light LA. With the irradiation device 13, employing any of the methods advantageously allows residual stress, which may be generated in the metal shaped object MO, to be small. Similar advantageous effects can be obtained also by (i) a metal shaping device including the irradiation device 13 and (ii) a metal shaping system 1 including the metal shaping device.

Note that a comparison between the first method and the second method described earlier shows that employing the second method allows residual stress, which may be generated in the metal shaped object MO, to be smaller in comparison with a case where the first method is employed. This is because performing the auxiliary heating not only reduces a temperature difference between a region subjected to the main heating and a region around such a region, but also makes it possible to slow down a decrease in temperature of at least part of the layers of the solidified or sintered metal shaped object MO after the main heating has ended.

Meanwhile, in comparison with the second method, employing the first method brings the following advantages. A first advantage is that a lamination density of the metal shaped object MO is unlikely to decrease. Specifically, in a case where the auxiliary heating is not performed before the main heating, the powder bed PB is rapidly heated during the main heating. This causes a metal liquid, which is generated by melting the metal powder, to easily have large momentum, so that flatness of surfaces of a metal solid, which is generated by solidifying the metal liquid, is easily impaired. This causes the lamination density of the metal shaped object MO to easily decrease. In contrast, in a case where the auxiliary heating is performed before the main heating, it is possible to slow down the rate at which the temperature of the powder bed PB rises during the main heating. This causes a metal liquid, which is generated by melting the metal powder, to be unlikely to have large momentum, so that flatness of surfaces of a metal solid, which is generated by solidifying the metal liquid, is unlikely to be impaired. This causes the lamination density of the metal shaped object MO to be unlikely to decrease.

A second advantage is that it is possible to cause the power of laser light, in which to be emitted during the main heating, to be small. This is because the temperature T of the powder bed PB during the main heating has already been somewhat high due to the auxiliary heating.

A third advantage is that the variation in temperature T among portions of the powder bed PB during the main heating can be small. For example, the temperature T of the powder bed PB is assumed to be raised from 20°C to 1000°C by the main heating without the auxiliary heating. In such a case, the temperature is raised by approximately 1000°C during the main heating. Therefore, if the variation in temperature rise falls within ±10%, the temperature T of the powder bed PB during the main heating varies within a range of approximately 900°C to 1100°C. If the variation in temperature T of the powder bed PB during the main heating is thus large, unfortunately excessive heating and insufficient heating can easily occur at one portion and another portion, respectively. Meanwhile, the temperature T of the powder bed PB is assumed to be raised to 600°C by the auxiliary heating and then raised from 600°C to 1000°C by the main heating. In such a case, the temperature is raised by approximately 400°C during the main heating. Therefore, if the variation in temperature rise falls within ±10%, the temperature T of the powder bed PB during the main heating varies within a range of approximately 960°C to 1040°C. If the variation in temperature T of the powder bed PB during the main heating is thus small, excessive heating and insufficient heating are advantageously unlikely to occur at one portion and another portion, respectively.

### (Measuring section and control section)

As described earlier, the metal shaping device can include the measuring section 14 and the control section 15. The measuring section 14 and the control section 15 will be described in the present section. Note that in Fig. 1, a line connecting the measuring section 14 and the control section 15 indicates a signal line for transmitting, to the control section 15, a signal indicating measurement result obtained by the measuring section 14. The measuring section 14 and the control section 15 are electrically or optically connected to each other. In addition, in Fig. 1, a line connecting the control section 15 and the irradiation device 13 indicates a signal line for transmitting, to the irradiation device 13, a control signal which is emitted from the control section 15. The control section 15 and the irradiation device 13 are electrically or optically connected to each other.

The measuring section 14 is configured to measure a temperature T (for example, surface temperature) of the powder bed PB. The measuring section 14 is, for example, a thermal camera. The control section 15 is configured to control the irradiation device 13. The control section 15 is, for example, a microcomputer. According to the present embodiment, the control section 15 controls the irradiation device 13 on the basis of the temperature T measured by the measuring section 14.

Examples of the control performed by the control section 15 encompass (1a) controlling the irradiation device 13 so that at least part of the first region DA is irradiated with the first laser light LA and then irradiated with the second laser light LB and (1b) controlling the irradiation device 13 so that at least part of the first region DA is irradiated with the second laser light LB at least one of the following times: before, during, and after the irradiation with the first laser light LA. Examples of the control performed by the control section 15 further encompass (2) controlling the first irradiating section 13A so that the temperature TA of the first region DA of the powder bed PB is higher than the 0.8 times as high as the melting point Tm of the metal powder, as well as controlling the second irradiating section 13B so that the temperature TB of the second region DB of the powder bed PB is 0.5 times to 0.8 times as high as the melting point Tm of the metal powder.

### (Method of producing metal shaped object)

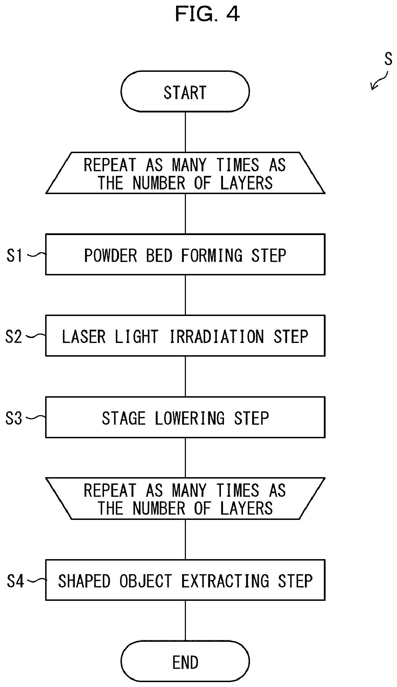

A production method S of producing a metal shaped object MO with use of the metal shaping system 1 will be described with reference to Fig. 4. Fig. 4 is a flowchart illustrating a flow of the production method S.

As illustrated in Fig. 4, the production method S includes a powder bed forming step S1, a laser light irradiation step S2 (an example of the "irradiation method" recited in the Claims), a stage lowering step S3, and a shaped object extracting step S4. As described earlier, the metal shaped object MO is shaped, layer by layer. The powder bed forming step S1, the laser light irradiation step S2, and the stage lowering step S3 are repeated as many times as the number of layers.

The powder bed forming step S1 is the step of forming a powder bed PB on the stage 10c of the shaping table 10. The powder bed forming step S1 can be achieved by, for example, (1) the step of supplying a metal powder with use of the recoater 10a and (2) the step of uniformly distributing the metal powder on the stage 10c with use of the roller 10b.

The laser light irradiation step S2 is the step of shaping one layer of the metal shaped object MO by irradiating the powder bed PB with the first laser light LA and with the second laser light LB. In the laser light irradiation step S2, main heating and auxiliary heating are performed by the first laser light LA and the second laser light LB, respectively. Note that the auxiliary heating of each point of the powder bed PB can be performed before, during, or after the main heating of the point. Note also that a region irradiated with the first laser light LA and the second laser light LB in the laser light irradiation step S2 is at least part of the whole region of the powder bed PB, and is determined in accordance with the shape of a layer of the metal shaped object MO.

Note that a temperature T of the powder bed PB when the powder bed PB is heated by the laser light LA need only be determined in accordance with whether each layer of the metal shaped object MO is to be shaped by melting and solidifying a metal powder or by sintering the metal powder. In a case where each layer of the metal shaped object MO is to be shaped by melting and solidifying a metal powder, the powder bed PB need only be subjected to the main heating so that the laser light LA causes the temperature T of the powder bed PB to be not less than the melting point Tm of the metal powder. In contrast, in a case where each layer of the metal shaped object MO is to be shaped by sintering a metal powder, the powder bed PB need only be subjected to the main heating so that the laser light LA causes the temperature T of the powder bed PB to be (i) higher than 0.8 times as high as the melting point Tm of the metal powder and (ii) lower than the melting point Tm of the metal powder.

The stage lowering step S3 is the step of lowering the stage 10c of the shaping table 10 by as much an amount as one layer. This allows a new powder bed PB to be formed on the stage 10c. The metal shaped object MO is completed by repeating the powder bed forming step S1, the laser light irradiation step S2, and the stage lowering step S3 as many times as the number of layers.

The shaped object extracting step S4 is the step of extracting a completed metal shaped object MO from the powder bed PB. The metal shaped object MO is produced in this way.

With the metal shaped object production method S including the laser light irradiation step S2 and the laser light irradiation step S2, it is advantageously possible that while a period of time for additive manufacturing of a metal shaped object MO is made short, residual stress which may be generated in the metal shaped object MO is made small. Alternatively, it is advantageously possible to perform, to a higher degree of freedom, irradiation with laser light LB for the auxiliary heating.

### (Recap)

An irradiation device (13) in accordance with an aspect of the present invention is an irradiation device (13) for use in metal shaping, including: a first irradiating section (13A) configured to irradiate, with first laser light (LA), a first region (DA) of a powder bed (PB) containing a metal powder; and a second irradiating section (13B) configured to irradiate, with second laser light (LB), a second region (DB) of the powder bed (PB), the irradiation device (13) being configured so that at least part of a track of the second region (DB) overlaps at least part of a track of the first region (DA), and the second irradiating section (13B) irradiates the second region (DB) with the second laser light (LB) so that (A) an energy density of the second laser light (LB), with which the second region (DB) is irradiated, is lower than an energy density of the first laser light (LA), with which the first region (DA) is irradiated or (B) a temperature of the second region (DB) of the powder bed (PB) is lower than a temperature of the first region (DA) of the powder bed (PB).

The irradiation device (13) in accordance with an aspect of the present invention is preferably configured so that a wavelength of the second laser light (LB) is longer than a wavelength of the first laser light (LA).

The irradiation device (13) in accordance with an aspect of the present invention is preferably configured so that the second irradiating section (13B) irradiates at least part of the first region (DA) with the second laser light (LB) after the at least part of the first region (DA) is irradiated with the first laser light (LA).

The irradiation device (13) in accordance with an aspect of the present invention is preferably configured so that the second irradiating section (13B) irradiates at least part of the first region (DA) with the second laser light (LB) before the at least part of the first region (DA) is irradiated with the first laser light (LA).

The irradiation device (13) in accordance with an aspect of the present invention is preferably configured so that: the first irradiating section (13A) irradiates the first region (DA) with the first laser light (LA) so that the temperature of the first region (DA) of the powder bed (PB) is higher than 0.8 times as high as a melting point of the metal powder; and the second irradiating section (13B) irradiates the second region (DB) with the second laser light (LB) so that the temperature of the second region (DB) of the powder bed (PB) is 0.5 times to 0.8 times as high as the melting point of the metal powder.

A metal shaping device in accordance with an aspect of the present invention is preferably configured to include: the irradiation device (13) in accordance with an aspect of the present invention; a first optical fiber (12A) through which the first laser light (LA) is guided; and a second optical fiber (12B) through which the second laser light (LB) is guided.

The metal shaping device in accordance with an aspect of the present invention is preferably configured to further include: a control section (15) configured to control the first irradiating section (13A) and the second irradiating section (13B) so that (A) at least part of the first region (DA) is irradiated with the second laser light (LB) after being irradiated with the first laser light (LA) or (B) the at least part of the first region (DA) is irradiated with the second laser light (LB) before being irradiated with the first laser light (LA).

The metal shaping device in accordance with an aspect of the present invention is preferably configured to further include: a control section (15) configured to (1) control the first irradiating section (13A) so that the temperature of the first region (DA) of the powder bed (PB) is higher than 0.8 times as high as a melting point of the metal powder and (2) control the second irradiating section (13B) so that the temperature of the second region (DB) of the powder bed (PB) is 0.5 times to 0.8 times as high as the melting point of the metal powder.

The metal shaping device in accordance with an aspect of the present invention is preferably configured to further include: a measuring section (14) configured to measure a temperature of the powder bed (PB), the control section (15) being configured to control the first irradiating section (13A) and the second irradiating section (13B) on the basis of the temperature measured by the measuring section (14).

A metal shaping system (1) in accordance with an aspect of the present invention is preferably configured to include: the metal shaping device in accordance with an aspect of the present invention; a first laser device (11A) configured to output the first laser light (LA); a second laser device (11B) configured to output the second laser light (LB); and a shaping table (10) configured to hold the powder bed (PB).

An irradiation method in accordance with an aspect of the present invention is an irradiation method including the steps of: (i) irradiating, with first laser light (LA), a first region (DA) of a powder bed (PB) containing a metal powder; and (ii) irradiating, with second laser light (LB), a second region (DB) of the powder bed (PB), at least part of a track of the second region (DB) overlapping at least part of a track of the first region (DA), and in the step (ii), the second region (DB) being irradiated with the second laser light (LB) so that (A) an energy density of the second laser light (LB), with which the second region (DA) is irradiated, is lower than an energy density of the first laser light (LA), with which the first region (DB) is irradiated or (B) a temperature of the second region (DB) of the powder bed (PB) is lower than a temperature of the first region (DA) of the powder bed (PB).

A metal shaped object production method in accordance with an aspect of the present invention is a method of producing a metal shaped object, including the steps of: (i) irradiating, with first laser light (LA), a first region (DA) of a powder bed (PB) containing a metal powder; and (ii) irradiating, with second laser light (LB), a second region (DB) of the powder bed (PB), at least part of a track of the second region (DB) overlapping at least part of a track of the first region (DA), and in the step (ii), the second region (DB) being irradiated with the second laser light (LB) so that (A) an energy density of the second laser light (LB), with which the second region (DB) is irradiated, is lower than an energy density of the first laser light (LA), with which the first region (DA) is irradiated or (B) a temperature of the second region (DB) of the powder bed (PB) is lower than a temperature of the first region (DA) of the powder bed (PB).

### [Supplemental Remarks]

The present invention is not limited to the foregoing embodiment, but can be altered by a skilled person in the art within the scope of the claims. The present invention also encompasses, in its technical scope, any embodiment derived by combining technical means disclosed in differing embodiments.

### Reference Signs List

- 1: Metal shaping system
- 10: Shaping table
- 10a: Recoater
- 10b: Roller
- 10c: Stage
- 10d: Table main body
- 11A: First laser device
- 11B: Second laser device
- 12A: First optical fiber
- 12B: Second optical fiber
- 13: Irradiation device
- 13A: First irradiating section
- 13B: Second irradiating section
- 13a: Galvano scanner
- 13a1: First galvano mirror
- 13a2: Second galvano mirror
- 13b: Condensing lens
- 14: Measuring section
- 15: Control section
- DA: First region
- DB: Second region
- LA: First laser light
- LB: Second laser light
- PB: Powder bed
- MO: Metal shaped object

## Claims

1. An irradiation device for use in metal shaping, comprising:
a first irradiating section configured to irradiate, with first laser light, a first region of a powder bed containing a metal powder; and
a second irradiating section configured to irradiate, with second laser light, a second region of the powder bed,
the irradiation device being configured so that
at least part of a track of the second region overlaps at least part of a track of the first region, and
the second irradiating section irradiates the second region with the second laser light so that (1) an energy density of the second laser light, with which the second region is irradiated, is lower than an energy density of the first laser light, with which the first region is irradiated or (2) a temperature of the second region of the powder bed is lower than a temperature of the first region of the powder bed.

2. The irradiation device according to claim 1, wherein
a wavelength of the second laser light is longer than a wavelength of the first laser light.

3. The irradiation device according to claim 1 or 2, wherein
the second irradiating section irradiates at least part of the first region with the second laser light after the at least part of the first region is irradiated with the first laser light.

4. The irradiation device according to any one of claims 1 through 3, wherein
the second irradiating section irradiates at least part of the first region with the second laser light before the at least part of the first region is irradiated with the first laser light.

5. The irradiation device according to any one of claims 1 through 4, wherein:
the first irradiating section irradiates the first region with the first laser light so that the temperature of the first region of the powder bed is higher than 0.8 times as high as a melting point of the metal powder; and
the second irradiating section irradiates the second region with the second laser light so that the temperature of the second region of the powder bed is 0.5 times to 0.8 times as high as the melting point of the metal powder.

6. A metal shaping device comprising:
the irradiation device according to any one of claims 1 through 5;
a first optical fiber through which the first laser light is guided; and
a second optical fiber through which the second laser light is guided.

7. The metal shaping device according to claim 6, further comprising:
a control section configured to control the first irradiating section and the second irradiating section so that (1) at least part of the first region is irradiated with the second laser light after being irradiated with the first laser light or (2) the at least part of the first region is irradiated with the second laser light before being irradiated with the first laser light.

8. The metal shaping device according to claim 6, further comprising:
a control section configured to (1) control the first irradiating section so that the temperature of the first region of the powder bed is higher than 0.8 times as high as a melting point of the metal powder and (2) control the second irradiating section so that the temperature of the second region of the powder bed is 0.5 times to 0.8 times as high as the melting point of the metal powder.

9. The metal shaping device according to claim 8, further comprising:
a measuring section configured to measure a temperature of the powder bed,
the control section being configured to control the first irradiating section and the second irradiating section on the basis of the temperature measured by the measuring section.

10. A metal shaping system comprising:
the metal shaping device according to any one of claims 6 through 9;
a first laser device configured to output the first laser light;
a second laser device configured to output the second laser light; and
a shaping table configured to hold the powder bed.

11. An irradiation method comprising the steps of:
(i) irradiating, with first laser light, a first region of a powder bed containing a metal powder; and
(ii) irradiating, with second laser light, a second region of the powder bed,
at least part of a track of the second region overlapping at least part of a track of the first region, and
in the step (ii), the second region being irradiated with the second laser light so that (1) an energy density of the second laser light, with which the second region is irradiated, is lower than an energy density of the first laser light, with which the first region is irradiated or (2) a temperature of the second region of the powder bed is lower than a temperature of the first region of the powder bed.

12. A method of producing a metal shaped object, comprising the steps of:
(i) irradiating, with first laser light, a first region of a powder bed containing a metal powder; and
(ii) irradiating, with second laser light, a second region of the powder bed,
at least part of a track of the second region overlapping at least part of a track of the first region, and
in the step (ii), the second region being irradiated with the second laser light so that (1) an energy density of the second laser light, with which the second region is irradiated, is lower than an energy density of the first laser light, with which the first region is irradiated or (2) a temperature of the second region of the powder bed is lower than a temperature of the first region of the powder bed.
